# EUROPÄISCHE PATENTANMELDUNG

(11) **EP 4 843 886 A1**
(43) Veröffentlichungstag der Anmeldung: **25.11.2026**
(21) Anmeldenummer: 26168774.3
(22) Anmeldetag: 27.03.2026
(51) Int. Cl.: B64C 1/18

(54) **ABSCHLUSSEINSATZ FÜR EIN BAUTEIL MIT VERSTÄRKUNGSSTRUKTUR**

(30) Priorität: 24.05.2025 DE 102025001765
(71) Anmelder: Airbus Operations GmbH, 21129 Hamburg (DE)
(72) Erfinder: SCHWICKERT, Jörg, 21129 Hamburg (DE); PEIMANN, Janes, 21129 Hamburg (DE); SCHWING, Bernd, 21129 Hamburg (DE)
(74) Vertreter: LKGLOBAL Partnerschaftsgesellschaft mbB

(57) **Zusammenfassung**

Die vorliegende Erfindung befasst sich mit einer Strukturleiste für eine Bodenplatte für einen Flugzeugkabinenboden.

Um eine verbesserte Bodenplatte bereitzustellen, weist die Strukturleiste einen Leistenkörper (14), umfassend einen Abdeckbereich (16) und einen Formschlussbereich (18) auf. Der Leistenkörper ist ausgeformt, um einer Randfläche (20) der Bodenplatte zu folgen. Der Abdeckbereich ist am Formschlussbereich angebracht. Der Formschlussbereich ist ausgeformt, um von Kanalöffnungen (22) in der Randfläche aufgenommen zu werden. Der Formschlussbereich ist ausgeformt, um den Leistenkörper an der Randfläche zu verankern. Der Abdeckbereich ist ausgeformt, um bündig an die Randfläche anzuschließen und diese zu überdecken.

## Beschreibung

### GEBIET DER ERFINDUNG

Die vorliegende Erfindung befasst sich mit einer Stabilisierung für eine Versteifungszwischenlage, genauer gesagt mit einer Strukturleiste für eine Bodenplatte für einen Flugzeugkabinenboden, eine Bodenplattenanordnung, ein Kabinenbodensystem, ein Luftfahrzeug und ein Verfahren zum Bereitstellen einer Bodenplatte für einen Flugzeugkabinenboden.

### HINTERGRUND DER ERFINDUNG

Um Gewicht und Stabilität von Bauteilen zu optimieren können Verstärkungsstrukturen in Bauteilen vorgesehen werden. Die Verstärkungsstrukturen können eine Vielzahl von Hohlräumen mit einer Vielzahl von Lastpfaden innerhalb einer Zwischenlage des Bauteils ausbilden. Die Hohlräume können Material und somit Gewicht sparen. Die Lastpfade können auf das Bauteil wirkende Lasten über eine größere Fläche verteilen und erhöhen die Steifigkeit des Bauteils. Solche Verstärkungsstrukturen können jedoch in gewissen Einsatzbereichen dieser Bauteile inkompatibel sein.

### ZUSAMMENFASSUNG DER ERFINDUNG

Eine Aufgabe der vorliegenden Erfindung besteht daher darin, eine verbesserte Bodenplatte bereitzustellen.

Diese Aufgabe wird durch den Gegenstand der unabhängigen Ansprüche gelöst. Weitere Beispiele sind in den abhängigen Ansprüchen angegeben. Die im folgenden beschriebenen Aspekte gelten auch für die Bodenplattenanordnung, das Kabinenbodensystem, das Luftfahrzeug und das Verfahren zum Bereitstellen der Bodenplatte für den Flugzeugkabinenboden.

Gemäß der Erfindung ist eine Strukturleiste für eine Bodenplatte für einen Flugzeugkabinenboden bereitgestellt. Die Strukturleiste weist einen Leistenkörper, umfassend einen Abdeckbereich und einen Formschlussbereich auf. Der Leistenkörper ist ausgeformt, um einer Randfläche der Bodenplatte zu folgen. Der Abdeckbereich ist am Formschlussbereich angebracht. Der Formschlussbereich ist ausgeformt, um von Kanalöffnungen in der Randfläche aufgenommen zu werden. Der Formschlussbereich ist ausgeformt, um den Leistenkörper an der Randfläche zu verankern. Der Abdeckbereich ist ausgeformt, um bündig an die Randfläche anzuschließen und diese zu überdecken.

Als ein Effekt ist mittels der Strukturleiste ein Bauteil mit einer Verstärkungsstruktur und einer nach außen hin abgeschlossenen Oberfläche bereitgestellt.

Als ein Effekt sind mittels der Strukturleiste längliche Kanäle der Verstärkungsstruktur abgeschlossen und abgedichtet.

Als ein Effekt sind mittels der Strukturleiste Fluide daran gehindert in das Innenvolumen der Bodenplatte einzudringen.

Als ein Effekt wird ein Ausfüllen der länglichen Kanäle mittels anderer Materialien umgangen, um ein Eindringen von Fluiden in die Kanäle zu verhindern und somit Gewicht zu sparen.

Als ein Effekt ist eine leichtere und schneller Montage von Bodenplatten mit einer Verstärkungsstruktur bereitgestellt.

Als ein Effekt sind einfacher anpassbare und zuschneidbare Bodenplatten ermöglicht.

Als ein Effekt ist eine feste Dichtmasse für Kanäle einer Verstärkungsstruktur bereitgestellt.

Als ein Vorteil werden flüssige Abdichtmittel für die Kanalöffnungen umgangen, die unkontrolliert in die länglichen Kanäle laufen und nicht an den Kanalöffnungen als Dichtmasse angesammelt werden können.

Als ein Vorteil ist eine Bodenplatte mit einer Verstärkungsstruktur bereitgestellt, die ein optimierbares Verhältnis zwischen Gewicht und Stabilität umfasst.

Gemäß einem Beispiel umfasst der Formschlussbereich mindestens ein Formschlusselement, welches sich als volumenausfüllender Zapfen vom Abdeckbereich aus erstreckt. Das mindestens eine Formschlusselement ist in eine der Kanalöffnungen einfügbar und ausgestaltet, um einen sich daran anschließenden Kanal zumindest teilweise zu füllen. Das mindestens eine Formschlusselement ist mit dem Abdeckbereich ausgeformt, um sich abdichtend an Ränder der einen der Kanalöffnungen anzuschmiegen, um ein Eindringen von Fluiden in den sich daran anschließenden Kanal zu verhindern.

Gemäß einem Beispiel ist der Leistenkörper mit dem Abdeckbereich und dem Formschlussbereich ausgestaltet, um mit einem Eingriff des Formschlussbereichs in die Kanalöffnungen die Steifigkeit und Stabilität der Bodenplatte zu erhöhen. Der Leistenkörper ist als Widerstand gegen globale Verformungen der Bodenplatte ausgestaltet.

Gemäß einem Beispiel umfasst das mindestens eine Formschlusselement einen querenden Aufnahmebereich für Befestigungsmittel, um den Leistenkörper an der Randfläche zu verankern. Bevorzugterweise ist der Aufnahmebereich ausgeformt, um sich entlang der kürzesten Breite der Randfläche in den sich daran anschließenden Kanal zu erstrecken.

Gemäß einem Beispiel folgen auf das mindestens eine Formschlusselement periodisch weitere Formschlusselemente entlang des Leistenkörpers. Das mindestens eine Formschlusselement und ein benachbartes, weiteres Formschlusselement sind komplementär zueinander ausgeformt, um in nebeneinander liegende Kanalöffnungen eingefügt zu werden. Bevorzugterweise sind das mindestens eine Formschlusselement und das benachbarte, weitere Formschlusselement ferner ausgestaltet, eine Trennwand zwischen den nebeneinander liegenden Kanalöffnungen vollständig zu umschließen, um die Steifigkeit der sich daran anschließenden Kanäle zu erhöhen.

Gemäß der Erfindung ist auch eine Bodenplattenanordnung bereitgestellt. Die Bodenplattenanordnung weist eine Strukturleiste gemäß einem der vorgehenden Beispiele, mindestens ein Befestigungsmittel und eine Bodenplatte auf. Die Bodenplatte weist ein Oberflächenelement, ein Unterflächenelement und eine Verstärkungsstruktur auf. Die Verstärkungsstruktur ist sandwichartig von dem Oberflächenelement und dem Unterflächenelement eingeschlossen und periodische Kanäle sind innerhalb der Bodenplatte ausformt, die in Kanalöffnungen an lateralen Randflächen der Bodenplatte münden. Die Kanalöffnungen sind von Formschlusselementen einer Strukturleiste dichtend verstopft, um ein Eindringen von Fluiden in die periodischen Kanäle zu verhindern. Das mindestens eine Befestigungsmittel sichert die Strukturleiste mittels des Formschlussbereichs an der Bodenplatte. Die Bodenplatte ist durch einen Eingriff des Formschlussbereichs in die Kanalöffnungen und einen Abdeckbereich des Leistenkörpers gegen Verformungen zusätzlich versteift.

Gemäß der Erfindung ist auch ein Kabinenbodensystem bereitgestellt. Das Kabinenbodensystem weist eine Sitzschiene mit einem Auflagebereich, mindestens ein Bodenplattenbefestigungsmittel und mindestens eine Bodenplattenanordnung gemäß dem vorherigen Beispiel auf. Die mindestens eine Bodenplattenanordnung liegt auf dem Auflagebereich auf und der Auflagebereich ist in Kontakt mit einer Strukturleiste. Das Bodenplattenbefestigungsmittel befestigt die Bodenplattenanordnung mit der Strukturleiste an der Sitzschiene. Bevorzugterweise dichtet die Strukturleiste mit der Sitzschiene ein Oberflächenelement vom Unterflächenelement der Bodenplattenanordnung ab.

Gemäß der Erfindung ist auch ein Luftfahrzeug bereitgestellt. Das Luftfahrzeug weist eine Rumpfstruktur mit einem Innenvolumen und ein Kabinenbodensystem gemäß dem vorherigen Anspruch auf. Das Kabinenbodensystem ist im Innenvolumen der Rumpfstruktur befestigt und trennt das Innenvolumen in einen oberen Kabinenbereich und einen unteren Kabinenbereich.

Gemäß der Erfindung ist auch ein Verfahren zum Bereitstellen einer Bodenplatte für einen Flugzeugkabinenboden bereitgestellt, das die folgenden Schritte aufweist:
a) Bereitstellen eines Leistenkörpers, umfassend einen Abdeckbereich und einen Formschlussbereich, wobei der Leistenkörper ausgeformt ist, um einer Randfläche der Bodenplatte zu folgen, wobei der Abdeckbereich am Formschlussbereich angebracht ist, wobei der Formschlussbereich ausgeformt ist, um von Kanalöffnungen in der Randfläche aufgenommen zu werden, wobei der Formschlussbereich ausgeformt ist, um den Leistenkörper an der Randfläche zu verankern und wobei der Abdeckbereich ausgeformt ist, um bündig an die Randfläche anzuschließen und diese zu überdecken.

Gemäß einem Aspekt der Erfindung ist eine Strukturschiene für ein Bauteil mit einer Versteifungslage vorgesehen. Die Versteifungslage bildet Hohlräume in dem Bauteil, die Material aussparen und somit das Gewicht des Bauteils verringern, weiterhin bildet die Versteifungslage eine Vielzahl von Lastenpfaden in dem Bauteil aus, die auf das Bauteil wirkende Lasten über eine große Fläche des Bauteils verteilen und somit seine Stabilität und Steifigkeit bedingen. Durch Zuschneiden und Formen des Bauteils in seiner späteren Verwendung gelangen die Öffnungen an die Oberfläche des Bauteils und sind der Umgebung des Bauteils exponiert. Flüssigkeiten und andere Fluide können in die Hohlräume des Bauteils dringen und dessen Stabilität und Funktion beeinträchtigen. Ferner kann durch den Schnitt in das Bauteil die Versteifungslage an Stabilität mit dem Bauteil verlieren. Daher ist eine Strukturschiene vorgesehen, die einerseits die Hohlräume von außen gewichtsparend verstopft und andererseits die Hohlräume an einer Schnittkante stabilisiert. Die Strukturschiene weist dazu entlang eines Verlaufs, periodische Stopfenelemente auf, die kammartig, gleichsam Kammzähnen angeordnet an einer Kammleiste sind. Die Kammzähne lassen sich in die periodisch sich wiederholenden Oberflächenöffnungen der Hohlräume einführen und verstopfen die Hohlräume vor Fluiden. Durch die Schienenform oder die Kammleiste werden die Lasten zwischen den Stopfenelementen beziehungsweise den Hohlräumen übertragen und das Bauteil stabilisiert.

Gemäß einem Aspekt der Erfindung ist ein Abschlusseinsatz für ein Bauteil mit Verstärkungsstruktur bereitgestellt.

Es sei darauf hingewiesen, dass die Merkmale der Ausführungsbeispiele der Strukturleiste auch für Ausführungsformen der Bodenplattenanordnung, des Kabinenbodensystems, des Luftfahrzeugs und des Verfahrens zum Bereitstellen der Bodenplatte für den Flugzeugkabinenboden gelten und umgekehrt. Außerdem können auch diejenigen Merkmale frei miteinander kombiniert werden, bei denen dies nicht explizit erwähnt ist.

### KURZE BESCHREIBUNG DER ZEICHNUNGEN

Nachfolgend wird anhand der beigefügten Zeichnungen näher auf Ausführungsbeispiele der Erfindung eingegangen.
- **Fig. 1**: zeigt schematisch ein Beispiel einer Strukturleiste im Verbund mit einer Bodenplatte.
- **Fig. 2**: zeigt auch schematisch ein Beispiel einer Strukturleiste im Verbund mit einer Bodenplatte.
- **Fig. 3**: zeigt schematisch einen Querschnitt eines Beispiels einer Strukturleiste im Verbund mit einem Kanal einer Bodenplatte.
- **Fig. 4**: zeigt schematisch ein Beispiel einer Strukturleiste.
- **Fig. 5**: zeigt schematisch einen Querschnitt eines Beispiels einer Strukturleiste im Verbund mit einem Kanal einer Bodenplatte.
- **Fig. 6**: zeigt schematisch ein Beispiel einer Strukturleiste im Verbund mit einer Bodenplatte, einer Bodenplattenanordnung und eines Kabinenbodensystems.
- **Fig. 7**: zeigt ein Beispiel eines Luftfahrzeugs.
- **Fig. 8**: zeigt einen Schritt eines Verfahrens zum Bereitstellen einer Bodenplatte für einen Flugzeugkabinenboden.

### DETAILLIERTE BESCHREIBUNG VON AUSFÜHRUNGSFORMEN

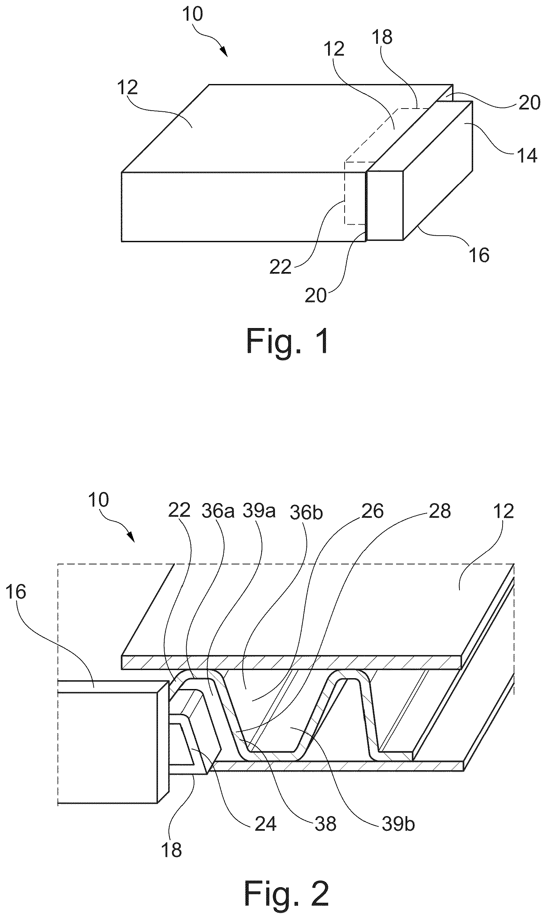

Fig. 1 zeigt schematisch ein Beispiel einer Strukturleiste 10 im Verbund mit einer Bodenplatte 12. Die Strukturleiste 10 für eine Bodenplatte 12 für einen Flugzeugkabinenboden weist einen Leistenkörper 14, umfassend einen Abdeckbereich 16 und einen Formschlussbereich 18 auf. Der Leistenkörper 14 ist ausgeformt, um einer Randfläche 20 der Bodenplatte 12 zu folgen. Der Abdeckbereich 16 ist am Formschlussbereich 18 angebracht. Der Formschlussbereich 18 ist ausgeformt, um von Kanalöffnungen 22 in der Randfläche 20 aufgenommen zu werden. Der Formschlussbereich 18 ist ausgeformt, um den Leistenkörper 14 an der Randfläche 20 zu verankern. Der Abdeckbereich 16 ist ausgeformt, um bündig an die Randfläche 20 anzuschließen und diese zu überdecken.

"Strukturleiste" kann auch als Verblendungsleiste, Abdeckleiste, Versiegelungsvorrichtung, Verblendungsvorrichtung, Dichtleiste, Leiste oder Rahmen, Versteifungsrahmen, Klemmleiste oder Strukturklemmleiste bezeichnet werden.

Der Begriff "Strukturleiste" bezieht sich auf eine Komponente, die genutzt werden kann, um an einen Bereich oder eine Fläche einer anderen Komponente angebracht zu werden und zu überdecken.

In einem Beispiel ist die gesamte Strukturleiste 10 durch ein Spritzgussverfahren einteilig bereitgestellt.

In einem Beispiel ist der Leistenkörper 14 mit dem Abdeckbereich 16 und dem Formschlussbereich 18 einteilig als Bauteil aus thermoplastischem Polymer ausgeformt, wie in Fig. 1 gezeigt ist.

Der Begriff "Bodenplatte" bezieht sich auf ein flächenhaftes, tragendes Bauteil, das horizontal angeordnet ist und direkt auf einer Trägerstruktur einer Flugzeugkabinenbodenkonstruktion aufliegt. Die Bodenplatte 12 bildet die unterste, tragende Ebene einer Kabine und dient als Fundament für in der Kabine vorgesehene Einrichtungen.

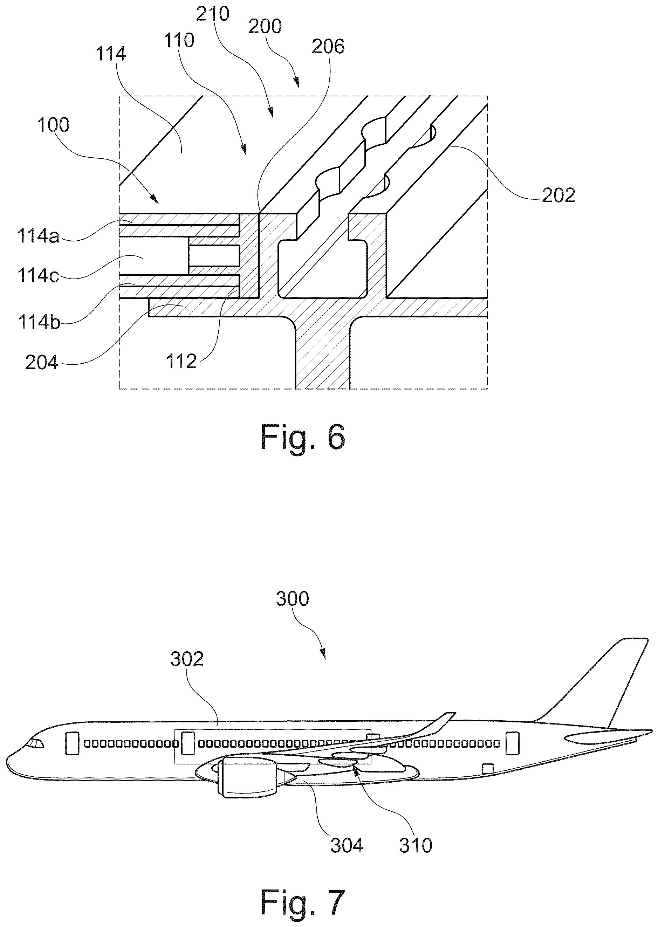

In einem Beispiel weist die Bodenplatte 12 ein Oberflächenelement, ein Unterflächenelement und eine Verstärkungsstruktur auf. Ein weiteres Beispiel hierzu ist mit Verweis auf Fig. 6 gezeigt. Das Oberflächenelement bildet den begehbaren und nach oben hin tragenden Teil der Bodenplatte 12, das Unterflächenelement ist gegenständig zum Oberflächenelement angeordnet. Die Flächennormale des Oberflächenelements zeigt in eine Hauptrichtung der Erdbeschleunigung, die Flächennormale des Unterflächenelements zeigt entgegen der Hauptrichtung der Erdbeschleunigung. Zwischen Oberflächenelement und Unterflächenelement ist sandwichartig eine Verstärkungsstruktur eingeschlossen. Diese drei Komponenten füllen ein Volumen der Bodenplatte 12 aus. Die Verstärkungsstruktur, das Oberflächenelement und das Unterflächenelement bilden entlang der Flächennormalen des Oberflächenelements und des Unterflächenelements eine Dicke der Bodenplatte 12 aus. Die Oberflächenelemente und Unterflächenelemente erstrecken sich über eine Fläche in einer x und y-Richtung, während die Dicke der Platte orthogonal dazu durch eine z-Richtung definiert ist. Die Oberflächenelemente und Unterflächenelemente werden durch Seiten- oder Kantenbegrenzungen und Eckenbegrenzungen eingerahmt, die gleichzeitig das Volumen der Bodenplatte 12 definieren. Lateral zu dem Oberflächenelement und dem Unterflächenelement befinden sich Randflächen, beziehungsweise eine Randfläche 20, deren Flächennormalen orthogonal zu den Flächennormalen der Oberflächenelemente und der Unterflächenelemente sind. Diese Randflächen, beziehungsweise die Randfläche 20, haben die Dicke der Bodenplatte 12 als kürzeste Breite und die Länge der Oberflächenelemente und Unterflächenelemente als Länge. Die Randflächen, beziehungsweise die Randfläche 20, offenbaren einen Teil der Verstärkungsstruktur. Die Verstärkungsstruktur bildet Kanalöffnungen 22 an den Randflächen, beziehungsweise an der Randfläche 20, aus, die an der Oberfläche der Randflächen, beziehungsweise an der Randfläche 20, münden. An die Kanalöffnungen 22 schließen sich Kanäle eines Kanalsystems an, die innerhalb des Volumens der Bodenplatte 12 verlaufen und das Innere der Bodenplatte 12 von der externen Umgebung der Bodenplatte 12 für Fluide zugänglich machen.

In einem Beispiel und auch im weiteren Verlauf näher erläutert, ist die Verstärkungsstruktur aus einem Wellenboden, einem Riffelboden oder auch einer Wellenfläche bereitgestellt, wie in Fig. 1 nicht gezeigt ist.

In einem Beispiel hat die Bodenplatte 12, eine Form, die einem Dreieck, einem Viereck, einem Quadrat, einem Rechteck, einem Parallelogramm, einem Rhombus, einem Trapez, einem Drachenviereck, einem Fünfeck, einem Sechseck, einem Siebeneck, einem Achteck, einem Neuneck, einem Zehneck, einem Kreis, einer Ellipse oder einem Kreisring entspricht. Das zuvor genannte Dreieck kann gleichseitig, gleichschenklig, rechtwinklig, spitzwinklig oder stumpfwinklig sein.

In einem Beispiel hat der Querschnitt des sich anschließenden Kanals 26 und der Kanalöffnungen 22, eine Form, die einem Dreieck, einem Viereck, einem Quadrat, einem Rechteck, einem Parallelogramm, einem Rhombus, einem Trapez, einem Drachenviereck, einem Fünfeck, einem Sechseck, einem Siebeneck, einem Achteck, einem Neuneck, einem Zehneck, einem Kreis, einer Ellipse oder einem Kreisring entspricht. Das zuvor genannte Dreieck kann gleichseitig, ungleichseitig, gleichschenklig, rechtwinklig, spitzwinklig oder stumpfwinklig sein. Eine dreieckige Kanalöffnung 22 ist im Beispiel der Fig. 2 gezeigt.

Der Begriff "Leistenkörper" bezieht sich auf ein längliches oder langgestrecktes und schienenartiges Objekt, dass an ein anderes Objekt angefügt werden kann.

In einem Beispiel weist der Leistenkörper 14 ein Querschnittsprofil auf, um sein Verhältnis zwischen Gewicht und Stabilität zu optimieren, das in Fig. 1 nicht gezeigt ist.

In einem Beispiel weist der Leistenkörper 14 zusätzliche Rippen auf, um eine lastoptimierte Versteifung zu erreichen.

In einem Beispiel weist der Abdeckbereich 16 zusätzliche Rippen auf, um eine lastoptimierte Versteifung zu erreichen.

Der "Abdeckbereich" kann auch als Verdeckungsfläche, Bedeckungselement, Abdeckung, Blende, Verschlussfläche und Abriegelungsfläche bezeichnet werden.

Der Begriff "Abdeckbereich" bezieht sich auf einen Teil des Leistenkörpers 14, der durch eine Dicke seines Materials eine Barriere zwischen einem Teil eines mit ihm verbundenen Objekts und der externen Umwelt bildet, wie in Fig. 1 gezeigt ist.

Der Formschlussbereich kann auch als Einsteckprofil, Füllprofil, Verankerungsprofil oder Passstück bezeichnet werden.

Der Begriff "Formschlussbereich" bezieht sich auf einen Teil des Leistenkörpers 14, der einen Verbindungsbereich zwischen dem Leistenkörper 14 und dem damit zu verbindenden Objekt bildet. Der Formschlussbereich 18 ist dazu teilweise komplementär mit der Struktur des damit zu verbindenden Objekts ausgebildet und passbar, beziehungsweise fügbar mit der Struktur des damit zu verbindenden Objekts ausgebildet, wie in Fig. 1 gezeigt ist.

In einem Beispiel sind der Abdeckbereich 16 und der Formschlussbereich 18 gegenständig, dass heißt, aufeinander abgewandten länglichen Flächen des Leistenkörpers 14 ausgebildet. Die Funktionen der Bereiche weisen also voneinander weg, wie in Fig. 1 gezeigt ist.

Der Begriff "Randfläche" bezieht sich auf Flächen deren Flächennormale orthogonal zu den Flächennormalen der Ober- und Unterflächenelementen der Bodenplatte 12 ist.

Der Begriff "Kanalöffnungen" bezieht sich auf durchgehende Löcher, beziehungsweise Ausnehmungen, die auf der Randfläche 20 einer Bodenplatte 12 als Konsequenz eines Querschnittes durch eine Verstärkungsstruktur gebildet sind.

In einem Beispiel sind die Kanalöffnungen 22 an einer Randfläche 20 der Bodenplatte 12 ausgebildet.

In einem Beispiel sind die Kanalöffnungen 22 an zwei gegenüberliegenden Randflächen der Bodenplatte 12 ausgebildet, wobei die Randflächen durch an die Kanalöffnung sich anschließende Kanäle verbunden sind, wie in Fig. 1 nicht gezeigt ist.

In einem Beispiel sind die Kanalöffnungen 22 an zwei, drei oder vier gegenüberliegenden Randflächen der Bodenplatte 12 ausgebildet, wie in Fig. 1 nicht gezeigt ist.

In einem Beispiel ist eine Kanalöffnungen 22 durch einen Schnitt quer zur Längserstreckung eines Kanals der Verstärkungsstruktur bereitgestellt, wie in Fig. 1 gezeigt ist.

In einem Beispiel ist eine Kanalöffnungen 22 durch einen Schnitt entlang der Längserstreckung eines Kanals der Verstärkungsstruktur bereitgestellt, wie in Fig. 1 nicht gezeigt ist.

In einem Beispiel ist eine Kanalöffnungen 22 durch einen Schnitt diagonal zur Längserstreckung eines Kanals der Verstärkungsstruktur bereitgestellt, wie in Fig. 1 nicht gezeigt ist.

Der Begriff "bündig" bezieht sich auf ein direktes, unmittelbares und materialkontaktendes Anliegen des Abdeckbereichs 16 an der Bodenplatte 12, sodass der Abdeckbereich 16 die Randflächen der Bodenplatte 12 abschließt, wie in Fig. 1 gezeigt ist.

In einem Beispiel bildet der Abdeckbereich 16 die Flächen des Oberflächenelements und des Unterflächenelements fort und ist von dem Umriss der Randfläche 20 umschrieben, wie in Fig. 1 nicht gezeigt ist.

In einem Beispiel ist der Abdeckbereich 16 quaderförmig, wie in Fig. 1 gezeigt ist.

In einem Beispiel ist der Abdeckbereich 16 quaderförmig und hat abgerundete Kanten, wie in Fig. 1 gezeigt ist.

Fig. 2 zeigt auch schematisch ein Beispiel einer Strukturleiste 10 im Verbund mit einer Bodenplatte 12. Der Formschlussbereich 18 der Strukturleiste 10 umfasst mindestens ein Formschlusselement 24, welches sich als volumenausfüllender Zapfen vom Abdeckbereich 16 aus erstreckt. Das mindestens eine Formschlusselement 24 ist in eine der Kanalöffnungen 22 einfügbar und ausgestaltet, um einen sich daran anschließenden Kanal 26 zumindest teilweise zu füllen. Das mindestens eine Formschlusselement 24 mit dem Abdeckbereich 16 ist ausgeformt, um sich abdichtend an Ränder 28 der einen der Kanalöffnungen 22 anzuschmiegen, um ein Eindringen von Fluiden in den sich daran anschließenden Kanal 26 zu verhindern.

"Formschlusselement" kann auch als Projektion, Vorsprung, Dübel, Stift oder Riegel bezeichnet werden

Der Begriff "Formschlusselement" bezieht sich auf einzelne Unterbereiche des Formschlussbereichs 18, die jeweils einen Vorsprung ausbilden, der zumindest teilweise komplementär zu einer Kanalöffnung der Verstärkungsstruktur in der Bodenplatte 12 ist und dort eingeführt werden kann. Das mindestens eine Formschlusselement 24 verhält sich dabei wie ein Stopfen. Das mindestens eine Formschlusselement 24 ist in seinem Umriss dem Umriss der Kanalöffnung beziehungsweise dem sich daran anschließenden Kanal 26 angepasst.

Der Begriff "aus erstreckt" bezieht sich auf das Erheben des mindestens einen Formschlusselements 24 vom Formschlussbereich 18 weg, beispielsweise folgt das mindestens eine Formschlusselement 24 Flächennormalen des Formschlussbereichs 18 und ist senkrecht zur Hauptausbreitungsrichtung des Leistenkörpers 14 ausgerichtet, welcher dem Verlauf der Randflächen der Bodenplatte 12 folgt.

Der Begriff "Ränder" bezieht sich auf einen Bereich der Kanalwände der Kanäle der Verstärkungsstruktur, die der externen Umgebung der Bodenplatte 12 exponiert sind.

Der Begriff "Fluid" bezieht sich auf eine breite Vielfalt von Substanzen, die in der externen Umgebung der Bodenplatte 12 vorkommen und deren Phasenzustand von fest über flüssig bis gasförmig reicht.

Der Begriff "abdichtend" bezieht sich auf einen formschlüssigen Bereich mit direktem Kontakt zu dem mindestens einen Formschlusselement 24.

Als ein Effekt sind Flüssigkeiten gehindert in das Innenvolumen der Bodenplatte zu gelangen.

Als ein Vorteil ist eine leichtere Bodenplatte bereitgestellt, die resistenter gegenüber Faktoren ihrer externen Umgebung ist.

Als ein Vorteil ist eine Bodenplatte mit einer abgedichteten inneren Verstärkungsstruktur bereitgestellt.

In einem Beispiel von Fig. 2 ist der Leistenkörper 14 mit dem Abdeckbereich 16 und dem Formschlussbereich 18 ausgestaltet, um mit einem Eingriff des Formschlussbereichs 18 in die Kanalöffnungen 22 die Steifigkeit und Stabilität der Bodenplatte 12 zu erhöhen. Der Leistenkörper 14 ist als Widerstand gegen globale Verformungen der Bodenplatte 12 ausgestaltet.

Der Begriff "Eingriff" bezieht sich auf ein Eindringen des Formschlussbereichs 18 gleichsam von Fingern, die in einen Haltegriff eingreifen.

Der Begriff "Steifigkeit und Stabilität" bezieht sich auf einen Ist-Zustand der Bodenplatte 12 ohne die Strukturleiste 10, der das Verhalten der Bodenplatte 12 unter der Einwirkung von Lasten beschreibt.

In einem Beispiel befindet sich eine wellenartige Verstärkungsstruktur zwischen Ober- und Unterflächenelementen, deren Minima und Maxima mit den Ober- und Unterflächenelementen verbunden sind, wie in Fig. 2 gezeigt ist. Längsgestreckte Kanäle sind dabei innerhalb der Bodenplatte 12 gebildet. Ohne den Eingriff der Strukturleiste 10 in die Kanalöffnungen 22, bei einer Druckbelastung des Oberflächenelements, kippen die Kanalwände, die Ober- und Unterflächenelemente verschieben sich zueinander und die Bodenplatte 12 wird in ihrer Dicke reduziert. Mit dem Eingriff des mindestens einen Formschlusselements 24 in eine Kanalöffnung wird dabei ein Kanal der Verstärkungsstruktur zumindest teilweise ausgefüllt, was die Kanalwände stabilisiert und ein Verkippen der Verstärkungsstruktur verhindert. Dies ist somit auch möglich, indem nur ein Teil des Kanals ausgefüllt wird und nicht der ganze Kanal. Damit wird zusätzlich Gewicht gespart.

Der Begriff "Widerstand" bezieht sich auf das Verhalten der Strukturleiste 10 im Verbund mit der Bodenplatte 12. Die Strukturleiste 10 weist dabei eine höhere Steifigkeit als die Bodenplatte 12 auf und gibt den auf sie einwirkenden Kräften und dem Kraftfluss durch die Bodenplatte 12 nicht nach.

In einem Beispiel weist der Leistenkörper 14 ein rigides und härteres Material auf als die Bodenplatte 12, um seine Steifigkeit auf die Bodenplatte 12 zu übertragen.

In einem Beispiel ist der Leistenkörper 14 durch ein Spritzgussverfahren aus thermoplastischem Polymer hergestellt.

In einem Beispiel sind der Abdeckbereich 16 und der Formschlussbereich 18 integral aus einem Guss hergestellt.

In einem Beispiel weist der Abdeckbereich 16 zusätzliche Verstärkungsstrukturen auf, die ein seitliches Verbiegen verhindern, wie in Fig. 2 nicht gezeigt ist.

In einem Beispiel ist der gesamte Leistenkörper 14 beim Anfügen an die Randfläche 20 der Bodenplatte 12 und dem Einfügen des mindestens einen Formschlusselements 24 in die Kanalöffnungen 22 verformbar und wird dann nach dem Anfügen ausgehärtet zu einer rigiden Struktur, wie in Fig. 2 nicht gezeigt ist.

Der Begriff "globale Verformungen" bezieht sich auf Stauchungen, Biegungen, Pressungen, Verzerrungen, die sich über die gesamte Fläche der Ober- und Unterflächenelemente der Bodenplatte 12 erstrecken, die in Fig. 2 nicht gezeigt sind.

Als ein Effekt wird die Steifigkeit der Bodenplatte erhöht, ohne das gesamte Leervolumen der Verstärkungsstruktur mit Material auszufüllen.

Als ein Vorteil wird eine rigidere und steifere Bodenplatte mit geringerem Gewicht bereitgestellt.

Als ein Vorteil wird eine höhe Formfreiheit des Umrisses von Bodenplatten bereitgestellt.

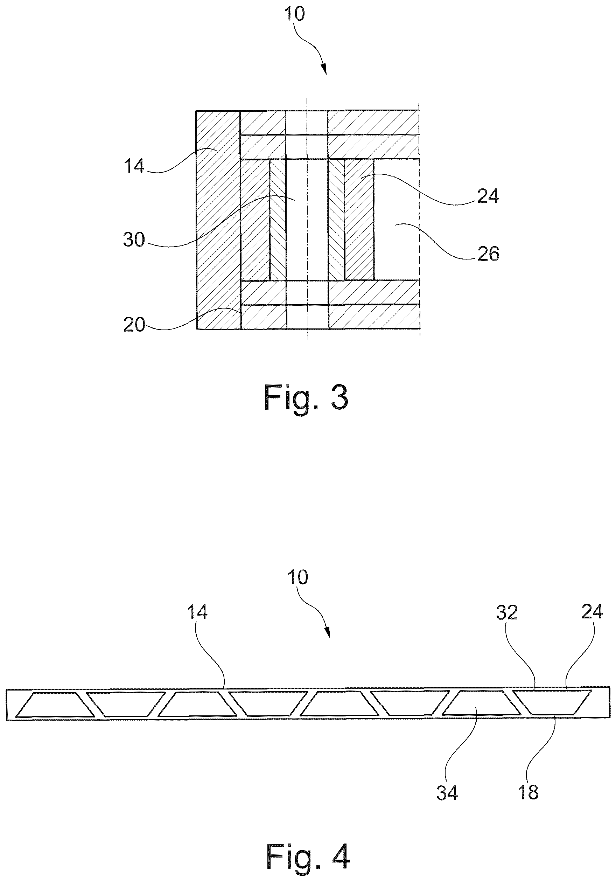

Fig. 3 zeigt schematisch einen Querschnitt eines Beispiels einer Strukturleiste 10 im Verbund mit einem Kanal einer Bodenplatte 12. Das mindestens eine Formschlusselement 24 umfasst einen querenden Aufnahmebereich 30 für Befestigungsmittel, um den Leistenkörper 14 an der Randfläche 20 zu verankern.

In einer Option von Fig. 3 und bevorzugterweise, ist der Aufnahmebereich 30 ausgeformt, um sich entlang der kürzesten Breite der Randfläche 20 in den sich daran anschließenden Kanal 26 zu erstrecken.

"Aufnahmebereich" kann auch als Langloch, Schlitz, Nut, Führungsschiene, Profilaufnahme, Hülse, Tunnel, Kanal, Bohrung oder Aussparung bezeichnet werden

Der Begriff "Aufnahmebereich" bezieht sich auf einen Abschnitt, der dazu dient, längliche Befestigungsmittel passgenau und formschlüssig zu umgreifen.

Der Begriff "Befestigungsmittel" bezieht sich auf Objekte, die dazu dienen zwei verschiedene Komponenten aneinander zu sichern.

In einem Beispiel ist das Befestigungsmittel ein Niet, eine Schraube oder ein Nagel.

In einem Beispiel weist der Aufnahmebereich 30 Formschlussmittel auf, die komplementär zum Befestigungsmittel ausgeformt sind.

In einem Beispiel ist der Aufnahmebereich 30 ein Schraubgewinde.

In einem Beispiel ist der Aufnahmebereich 30 eine Hülse mit Schraubgewinde, die in dem mindestens einem Formschlusselement 24 eingesetzt ist.

In einem Beispiel ist die Hülse des Aufnahmebereichs 30 als zusätzliche Stabilisierung der Strukturleiste 10 vorgesehen.

In einem Beispiel ist die Hülse des Aufnahmebereichs 30 aus einem Metallgewinde.

Der Begriff "entlang der kürzesten Breite" bezieht sich auf die Dicke der Bodenplatte 12, die die Länge der kürzesten Seite der Randfläche 20 darstellt.

Der Begriff "queren" bezieht sich darauf, dass der Aufnahmebereich 30 entlang einer Dicke des mindestens einen Formschlusselementes 24 verläuft. Dabei verläuft der Aufnahmebereich 30 entlang der Flächennormalen des Oberflächenelements und des Unterflächenelements. Der Eingang zum Aufnahmebereich 30 befindet sich dabei auf einer Strecke auf dem mindestens einen Formschlusselement 24, die sich vom Abdeckbereich 16 zum Ende des mindestens einen Formschlusselements 24 entlang der sich anschließenden Kanäle erstreckt, wie in Fig. 3 gezeigt ist. Der Eingang schließt sich dabei Eingängen an dem Oberflächenelement und dem Unterflächenelement an.

In einem Beispiel ist der Aufnahmebereich 30 so ausgestaltet, dass er bei der Aufnahme des Befestigungsmittels Material des mindestens einen Formschlusselements 24 verdrängt und gegen die Kanalöffnungen 22, gegen die Kanalwände und die Kanäle presst. Dadurch wird die Verankerung des Formschlussbereichs 18 an der Randfläche 20 der Bodenplatte 12 verstärkt, wie in Fig. 3 nicht gezeigt ist.

Als ein Effekt wird ein zusätzlicher stabilisierender Lastpfad durch den Aufnahmebereich und ein Befestigungsmittel bereitgestellt.

Als ein Effekt wird die Strukturleiste 10 nicht bei Belastung aus der Bodenplatte herausgepresst.

Als ein Vorteil ist eine Bodenplatte bereitgestellt, die höhere Gewichte tragen kann.

Fig. 4 zeigt schematisch ein Beispiel einer Strukturleiste 10. Das mindestens eine Formschlusselement 24 weist mindestens eine Aussparung 32 auf, um sein Verhältnis zwischen Gewicht und Stabilität zu optimieren.

Der Begriff "Aussparung" bezieht sich auf eine materialsparende Ausnehmung im Material des mindestens einen Formschlusselements 24.

In einem Beispiel ist der Zapfen des mindestens einen Formschlusselements 24 hohl und aus einer Wand geformt.

In einem Beispiel wird durch die Aussparung 32 eine Vorspannkraft beim Einführen in die Kanalöffnungen 22 erzeugt, wie in Fig. 3 nicht gezeigt ist.

Als ein Vorteil wird eine gewichtssparendere Bodenplatte bereitgestellt.

In einem Beispiel, nicht in Fig. 4 gezeigt, ist der Aufnahmebereich 30 durch die mindestens eine Aussparung 32 als hülsenartige Verstärkungsrippe für das mindestens eine Formschlusselement 24 ausgestaltet.

Der Begriff "hülsenartige Verstärkungsrippe" bezieht sich auf eine Hülse als Aufnahmebereich, die durch die Aussparung freigelegt ist.

In einem Beispiel bildet die Hülse einen vertikalen Lastpfand vom Oberflächenelement zum Unterflächenelement.

Als ein Vorteil ist eine genauere Lasteintragung vom Oberflächenelement zum Unterflächenelement über die Strukturleiste 10 ermöglicht.

In einem Beispiel der Fig. 4 folgen auf das mindestens eine Formschlusselement 24 periodisch weitere Formschlusselemente entlang des Leistenkörpers 14. Das mindestens eine Formschlusselement 24 und ein benachbartes, weiteres Formschlusselement 34 sind komplementär zueinander ausgeformt, um in nebeneinander liegende Kanalöffnungen 36a, 36b eingefügt zu werden.

In einer Option der Fig. 4 und bevorzugterweise sind das mindestens eine Formschlusselement 24 und das benachbarte, weitere Formschlusselement 34 ferner ausgestaltet, eine Trennwand 38 zwischen den nebeneinander liegenden Kanalöffnungen 36a, 36b vollständig zu umschließen, um die Steifigkeit der sich daran anschließenden Kanäle (39a, 39b) zu erhöhen, wie in Fig. 4 nicht gezeigt ist.

Der Begriff "periodisch" bezieht sich darauf, dass die weiteren Formschlusselemente nach dem mindestens einen Formschlusselement 24 entlang einer Kette, kammartig und sich wiederholend auf dem Formschlussbereich angeordnet sind, wie in Fig. 4 gezeigt ist.

Der Begriff "komplementär" bezieht sich auf eine Ausformung des Querschnitts von dem mindestens einen Formschlusselement 24 und dem benachbarten, weiteren Formschlusselement 34, deren äußere Form so aufeinander abgestimmt ist, dass eine ganzheitliche Form miteinander ohne Lücken oder Diskontinuitäten gebildet ist, wie in Fig. 4 gezeigt ist.

In einem Beispiel ist der Umriss des mindestens einen Formschlusselements 24 ein Trapez oder ein Dreieck. Der Umriss des benachbarten, weiteren Formschlusselements 34 ist ein dazu komplementäres Trapez, wie in Fig. 4 gezeigt ist, oder ein komplementäres Dreieck, welches nicht in Fig. 4 gezeigt ist. Das Trapez und das zueinander komplementäre Trapez bilden wiederum eine geometrisch einheitliche Figur als Gesamttrapez. Das Dreieck und das komplementäre Dreieck bilden wiederum eine geometrisch einheitliche Figur als Trapez oder Raute.

In einem Beispiel wechselt sich die Orientierung der Formen der weiteren Formschlusselemente, bspw. liegendes und stehendes Trapez oder Dreieck entlang des Leistenkörper 14 periodisch ab.

Der Begriff "nebeneinander liegende Kanalöffnungen" bezieht sich auf benachbarte Kanalöffnungen, beziehungsweise Kanäle, die komplementär zueinander ausgeformt sind, da sie die gleiche Kanalwand besitzen, die beide Kanäle voneinander trennt. Ist ein Kanal ein auf der Spitze stehendes Dreieck, ist der danebenliegende Kanal mit der gleichen Trennwand 38 ein liegendes Dreieck, wie in Fig. 4 nicht gezeigt ist.

Der Begriff "Trennwand" bezieht sich auf die Kanalwand der Verstärkungsstruktur.

In einem Beispiel werden die benachbarten Formschlusselemente, beziehungsweise das mindestens eine Formschlusselement 24 und das benachbarte, weitere Formschlusselement 34, in ebensolche benachbarten Kanalöffnungen 36a, 36b, beziehungsweise Kanäle eingeführt und dabei durch eine Kanalwand oder Trennwand 38 getrennt, wie in Fig. 4 nicht gezeigt ist. Durch den Formschluss dieser benachbarten Formschlusselemente wird die Trennwand 38 stabilisiert. Diese komplementären Formschlusselemente zeichnen sich durch gleichmäßige gegenständige Krafteintragung zwischeneinander aus.

Als ein Effekt wird der Formschluss des Formschlussbereichs mit der Randfläche der Bodenplatte verstärkt.

Als ein Vorteil wird eine Bodenplatte mit einer noch besseren Abdichtung der Randflächen bereitgestellt.

In einem Beispiel, dass in Fig. 4 nicht gezeigt ist, verjüngt sich das mindestens eine Formschlusselement 24 vom Abdeckbereich 16 aus keilförmig, um sein Einfügen in die Kanalöffnungen 22 zu erleichtern.

In einem Beispiel verjüngt sich nur die zum Oberflächenelement zugewandte Seite des Formschlusselements 24 oder die dieser Seite abgewandte Seite.

In einem Beispiel läuft das Formschlusselement 24 beidseitig keilförmig zu.

In einem Beispiel sind die Kanten des Formschlusselements 24 entgratet, um leichter in die Kanalöffnungen 22 und die sich anschließenden Kanäle eingeführt zu werden.

Als ein Effekt sind die Formschlussbereiche leichter in die Kanalöffnungen einführbar.

Als ein Effekt ist die Haftungskraft der Strukturleiste an der Randfläche der Bodenplatte leichter erhöhbar.

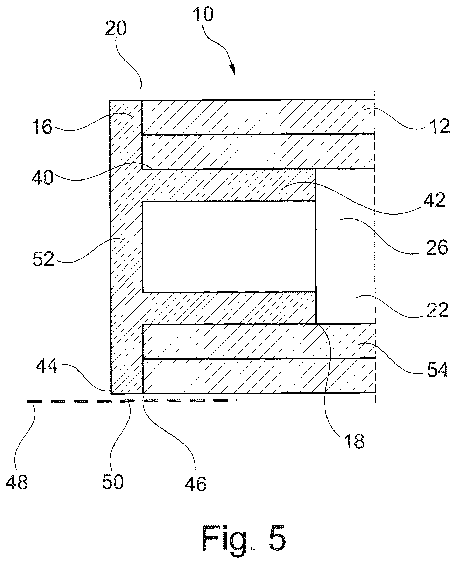

Fig. 5 zeigt schematisch einen Querschnitt eines Beispiels einer Strukturleiste 10 im Verbund mit einem Kanal einer Bodenplatte 12. Das Abdeckelement hat eine laterale Passformung 40, um sich an eine Vertiefung 42 anzuschmiegen, die entlang der Randfläche 20 quer zu den Kanalöffnungen 22 und den sich anschließenden Kanälen verläuft, um vom Volumen der Bodenplatte 12 umschrieben zu werden, wobei letzteres nicht in Fig. 5 gezeigt ist.

Der Begriff "laterale Passformung" bezieht sich auf eine Auswölbung im Querprofil und entlang des Abdeckbereichs 16, der an einer dem Formschlussbereich 18 zugewandten Seite liegt.

Der Begriff "Vertiefung" bezieht sich auf eine Rinne, die an der Randfläche 20 zwischen Oberseitenelement und Unterseitenelement liegt und an deren Rinnenboden die Kanalöffnungen 22 und die Verstärkungsstruktur liegen.

Als ein Effekt wird ein glatter Übergang zwischen den Kanten der Bodenplatte und der Strukturleiste 10 geschaffen.

Als ein Vorteil wird eine Bodenplatte mit einer robusteren, geschützteren und integralen Strukturleiste 10 bereitgestellt.

In einem Beispiel ist das Abdeckelement ausgeformt eine Weiterbildung des Bodenplattenvolumens auszuformen und die Länge der Bodenplatte 12 zu erweitern.

In einem Beispiel der Fig. 5 hat das Abdeckelement eine zusätzliche Dichtlippe 44, die ausgestaltet ist, um über Kantenbegrenzungen 46 der Bodenplatte 12 hinauszuragen, was in Fig. 5 nicht gezeigt ist, und mit diesen und einer angrenzenden Sitzschiene 48 einen Dichtungsbereich 50 zu bilden.

Der Begriff "zusätzliche Dichtlippe" bezieht sich auf eine Auswölbung am Abdeckelement, die über den Flächen des Oberflächenelements oder des Unterflächenelements herausragt und nicht Teilmenge dieser Flächen ist.

Der Begriff "Kantenbegrenzungen" bezieht sich auf die Ecken und Kanten der Bodenplatte 12, die das Bodenplattenvolumen umfassen.

Der Begriff "Sitzschiene" bezieht sich auf längliche Strukturen, die Teil einer Trägerstruktur der Bodenplatten sind und an denen Sitze oder Monumente, aber auch Bodenplatten befestigt werden können.

Der Begriff "Dichtungsbereich" bezieht sich auf einen Bereich, der durch den direkten Kontakt zwischen Dichtlippe 44 und Sitzschiene 48 gebildet ist und der eine Barriere für Fluide darstellt.

In einem Beispiel, das in Fig. 5 nicht gezeigt ist, ist die Dichtlippe 44 als komplementäres Adapterstück zu einer benachbarten Strukturleiste einer benachbarten Bodenplatte ausgestaltet, um eine formschlüssige Verbindung zwischen benachbarten Bodenplatten bereitzustellen.

In eine Beispiel kann der Dichtbereich parallel zu der Randfläche 20 und/oder zu den Oberflächenelementen und den Unterflächenelementen verlaufen.

Als ein Vorteil ist eine Bodenplatte bereitgestellt, die die Trägerstruktur eines Bodenplattensystems besser von der externen Umgebung abdichten kann.

In einem Beispiel von Fig. 5 hat der Formschlussbereich ferner eine flexible Beschichtung 52, um Reibungshaftung mit einem Bodenplattenmaterial 54 zu erhöhen und das Verankern zu verstärken.

In einem Beispiel umfasst die flexible Beschichtung 52 Silikon, Kautschuk, Butylkautschuk oder ein anderes Elastomer.

In einem Beispiel umfasst das Bodenplattenmaterial ein thermoplastisches Polymer.

Als ein Vorteil ist ein besserer Halt der Strukturleiste an der Bodenplatte gewährleistet.

Fig. 6 zeigt schematisch ein Beispiel einer Strukturleiste 110 im Verbund mit einer Bodenplatte 114, einer Bodenplattenanordnung 100 und eine Kabinenbodensystem. Die Bodenplattenanordnung 100 weist eine Strukturleiste 110 gemäß einem der vorgehenden Beispiele mindestens ein Befestigungsmittel 112 und eine Bodenplatte 114, aufweisend ein Oberflächenelement 114a ein Unterflächenelement 114b und eine Verstärkungsstruktur 114c auf. Die Verstärkungsstruktur 114c ist sandwichartig von dem Oberflächenelement 114a und dem Unterflächenelement 114b eingeschlossen und formt periodische Kanäle innerhalb der Bodenplatte 114 aus, die in Kanalöffnungen 22 an lateralen Randflächen der Bodenplatte 114 münden, welche in Fig. 6 nicht gezeigt sind. Die Kanalöffnungen sind von Formschlusselementen einer Strukturleiste 110 dichtend verstopft, um ein Eindringen von Fluiden in die periodischen Kanäle zu verhindern. Das mindestens eine Befestigungsmittel 112 sichert die Strukturleiste 110 mittels des Formschlussbereichs 18 an der Bodenplatte 114. Die Bodenplatte 114 ist durch einen Eingriff des Formschlussbereichs 18 in die Kanalöffnungen und einen Abdeckbereich des Leistenkörpers gegen Verformungen zusätzlich versteift. Einzelne Merkmale der Bodenplatte sind aus Gründen der Übersichtlichkeit in Fig. 6 nicht gezeigt.

Die Bodenplattenanordnung kann auch als Bodenpanelanordnung oder Fußbodenplattenanordnung bezeichnet werden.

Der Begriff "Oberflächenelement" bezieht sich auf die flächige Seite der Bodenplatte 114, die belastet wird durch Fracht oder Passagiere, wie in Fig. 6 gezeigt.

Der Begriff "Unterflächenelement" bezieht sich auf die flächige Seite der Bodenplatte 114, die dem Oberflächenelement 114a abgewandt ist, wie in Fig. 6 gezeigt.

Der Begriff "Verstärkungsstruktur" bezieht sich auf ein Element, welches eine Vielzahl von Verbindungspunkten und Lastpfaden zwischen dem Oberflächenelement 114a und dem Unterflächenelement 114b schafft, aber in Fig 2 und nicht in Fig. 6 detailliert gezeigt ist.

In einem Beispiel ist die Verstärkungsstruktur 114c durch eine undulierende, wellenartige Fläche bereitgestellt, mit Wellentälern und Wellengipfel, auch Minima und Maxima genannt. Die benachbarten Minima und Maxima stoßen an die, dem Bodenplatteninnenvolumen zugewandten, Innenflächen des Oberflächenelements 114a und Unterflächenelements 114b und sind mit diesen verbunden. Dabei schließt die Verstärkungsstruktur 114c längliche Durchgänge mit dem Oberflächenelement 114a und Unterflächenelement 114b im Innenvolumen der Bodenplatte 114 ein, die an zwei gegenüberliegenden Randflächen der Bodenplatte 114 münden.

In einem Beispiel folgen die Kanalöffnungen den Minima und Maxima der Verstärkungsstruktur 114c.

In einem Beispiel sind die Kanalöffnungen quer zu den Minima und Maxima der Verstärkungsstruktur 114c angeordnet.

In einem Beispiel folgen die Kanalöffnungen einem Schnitt diagonal zu den Minima und Maxima der Verstärkungsstruktur 114c.

Der Begriff "periodische Kanäle" bezieht sich auf die Durchgänge, die durch abwechselnde Strukturänderungsfolge des Verstärkungselements ausgebildet werden.

Als ein Vorteil ist eine stabilere, leichtere und robustere und abgedichtete Bodenplatte bereitgestellt.

Fig. 6 zeigt auch schematisch ein Beispiel eines Kabinenbodensystems. Das Kabinenbodensystem 200 weist eine Sitzschiene 202 mit einem Auflagebereich 204, mindestens ein Bodenplattenbefestigungsmittel 206 und mindestens eine Bodenplattenanordnung 210 gemäß dem vorherigen Beispiel auf. Die mindestens eine Bodenplattenanordnung 210 liegt auf dem Auflagebereich 204 auf und der Auflagebereich 204 ist in Kontakt mit einer Strukturleiste 110. Das Bodenplattenbefestigungsmittel 206 befestigt die Bodenplattenanordnung 210 mit der Strukturleiste 110 an der Sitzschiene 202.

In einer Option der Fig. 6 und bevorzugterweise, dichtet die Strukturleiste 110 mit der Sitzschiene 202 ein Oberflächenelement 114a vom Unterflächenelement 114b der Bodenplattenanordnung 210 ab.

Der Begriff "Bodenplattenbefestigungsmittel" bezieht sich auf eine Vorrichtung, wie Bolzen, Stifte oder Nieten, die die Bodenplattenanordnung 210 an der Sitzschiene 202 befestigen, die in Fig. 6 nicht gezeigt sind.

Der Begriff "Auflagebereich" bezieht sich auf einen Bereich der Sitzschiene 202, auf dem die Bodenplattenanordnung 210 lagert. Dabei kann es sich um eine Ausnehmung lateral zu einer Sitzschienenkrone handeln in der eine Randfläche der Bodenplattenanordnung 210 eingefügt werden kann oder eine glatte Auflagefläche, auf der die Bodenplattenanordnung 210 aufliegt, wie in Fig. 6 gezeigt.

In einem Beispiel wird die Strukturleiste 110, oder auch eine Dichtlippe der Strukturleiste 110, mit dem Bodenplattenbefestigungsmittel 206 und der Bodenplattenanordnung 210 gegen die Sitzschiene 202 gepresst, wodurch sich ein abgedichteter Bereich bildet, der eine darunterliegende Trägerstruktur vor Fluiden auf der Bodenplattenanordnung 210 schützt, wie in Fig. 6 gezeigt.

In einem Beispiel ist das mindestens eine Bodenplattenbefestigungsmittel 206 gleichzeitig das mindestens eine Befestigungsmittel für die Strukturleiste 110 an der Bodenplatte 114, wie in Fig. 6 nicht gezeigt ist.

In einem Beispiel ist stellt das mindestens eine Befestigungsmittel für die Strukturleiste 110 auch das mindestens eine Bodenplattenbefestigungsmittel 206 bereit.

Als ein Vorteil ist ein korrosionsgeschütztes Kabinenbodensystem bereitgestellt mit einer leicht herstellbaren und kostengünstigen Trägerstruktur.

Als ein Effekt werden parasitäre Lasten zwischen einer Bodenplatte und einer Trägerstruktur vermieden.

Als ein Vorteil wird eine Bodenplatte mit einer direkten Lasteintragung zur Trägerstruktur bereitgestellt.

Fig. 7 zeigt ein Beispiel eines Luftfahrzeugs 300. Das Luftfahrzeug 300, weist eine Rumpfstruktur 302 mit einem Innenvolumen 304 und ein Kabinenbodensystem 310 gemäß dem vorherigen Beispiel auf. Das Kabinenbodensystem 310 ist im Innenvolumen 304 der Rumpfstruktur 302 befestigt und trennt das Innenvolumen 304 in einen oberen Kabinenbereich und einen unteren Kabinenbereich.

Als ein Vorteil resultiert ein leichteres und stabileres Luftfahrzeug.

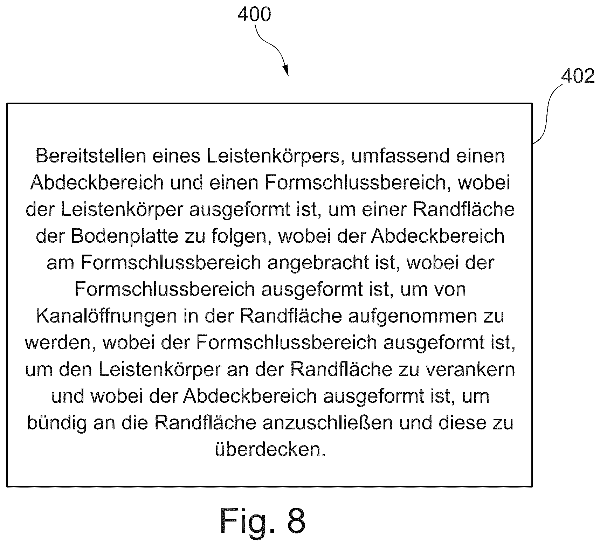

Fig. 8 zeigt einen Schritt eines Verfahrens 400 zum Bereitstellen einer Bodenplatte für einen Flugzeugkabinenboden. In einem ersten Schritt 402 wird ein Leistenkörpers, umfassend einen Abdeckbereich und einen Formschlussbereich bereitgestellt, wobei der Leistenkörper ausgeformt ist, um einer Randfläche der Bodenplatte zu folgen, wobei der Abdeckbereich am Formschlussbereich 18 angebracht ist, wobei der Formschlussbereich 18 ausgeformt ist, um von Kanalöffnungen in der Randfläche aufgenommen zu werden, wobei der Formschlussbereich ausgeformt ist, um den Leistenkörper an der Randfläche zu verankern und wobei der Abdeckbereich ausgeformt ist, um bündig an die Randfläche anzuschließen und diese zu überdecken.

Als ein Vorteil kann eine stabile Bodenplatte, schneller und leichter hergestellt werden.

Die oberhalb beschriebenen Ausführungsbeispiele können in unterschiedlicher Art und Weise kombiniert werden. Insbesondere können auch Aspekte der Vorrichtungen für die Ausführungsformen des Verfahrens verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Eine Strukturleiste (10) für eine Bodenplatte (12) für einen Flugzeugkabinenboden, aufweisend:
- einen Leistenkörper (14), umfassend:
- einen Abdeckbereich (16); und
- einen Formschlussbereich (18);
wobei der Leistenkörper ausgeformt ist, um einer Randfläche (20) der Bodenplatte zu folgen;
wobei der Abdeckbereich am Formschlussbereich angebracht ist;
wobei der Formschlussbereich ausgeformt ist, um von Kanalöffnungen (22) in der Randfläche aufgenommen zu werden;
wobei der Formschlussbereich ausgeformt ist, um den Leistenkörper an der Randfläche zu verankern; und
wobei der Abdeckbereich ausgeformt ist, um bündig an die Randfläche anzuschließen und diese zu überdecken.

2. Strukturleiste gemäß Anspruch 1, wobei der Formschlussbereich mindestens ein Formschlusselement (24) umfasst, welches sich als volumenausfüllender Zapfen vom Abdeckbereich aus erstreckt;
wobei das mindestens eine Formschlusselement in eine der Kanalöffnungen einfügbar ist und ausgestaltet ist, um einen sich daran anschließenden Kanal (26) zumindest teilweise zu füllen; und
wobei das mindestens eine Formschlusselement mit dem Abdeckbereich ausgeformt ist, um sich abdichtend an Ränder (28) der einen der Kanalöffnungen anzuschmiegen, um ein Eindringen von Fluiden in den sich daran anschließenden Kanal zu verhindern.

3. Strukturleiste gemäß Anspruch 1 oder 2, wobei der Leistenkörper mit dem Abdeckbereich und dem Formschlussbereich ausgestaltet ist, um mit einem Eingriff des Formschlussbereichs in die Kanalöffnungen die Steifigkeit und Stabilität der Bodenplatte zu erhöhen; und
wobei der Leistenkörper als Widerstand gegen globale Verformungen der Bodenplatte ausgestaltet ist.

4. Strukturleiste gemäß Anspruch 2 oder 3, wobei das mindestens eine Formschlusselement einen querenden Aufnahmebereich (30) für Befestigungsmittel umfasst, um den Leistenkörper an der Randfläche zu verankern; und
wobei der Aufnahmebereich ausgeformt ist, um sich entlang der kürzesten Breite der Randfläche in den sich daran anschließenden Kanal zu erstrecken.

5. Strukturleiste gemäß Anspruch 2, 3 oder 4, wobei das mindestens eine Formschlusselement mindestens eine Aussparung (32) aufweist, um sein Verhältnis zwischen Gewicht und Stabilität zu optimieren.

6. Strukturleiste gemäß Anspruch 5, wobei der Aufnahmebereich durch die mindestens eine Aussparung als hülsenartige Verstärkungsrippe für das mindestens eine Formschlusselement ausgestaltet ist.

7. Strukturleiste gemäß einem der Ansprüche 2 bis 6, wobei auf das mindestens eine Formschlusselement periodisch weitere Formschlusselemente entlang des Leistenkörpers folgen;
wobei das mindestens eine Formschlusselement und ein benachbartes, weiteres Formschlusselement (34) komplementär zueinander ausgeformt sind, um in nebeneinander liegende Kanalöffnungen (36a, 36b) eingefügt zu werden; und
wobei das mindestens eine Formschlusselement und das benachbarte, weitere Formschlusselement ferner ausgestaltet sind, eine Trennwand (38) zwischen den nebeneinander liegenden Kanalöffnungen vollständig zu umschließen, um die Steifigkeit der sich daran anschließenden Kanäle (39a, 39b) zu erhöhen.

8. Strukturleiste gemäß einem der Ansprüche 2 bis 7, wobei sich das mindestens eine Formschlusselement vom Abdeckbereich aus keilförmig verjüngt, um sein Einfügen in die Kanalöffnungen zu erleichtern.

9. Strukturleiste gemäß einem der vorhergehenden Ansprüche, wobei das Abdeckelement eine laterale Passformung (40) hat, um sich an eine Vertiefung (42) anzuschmiegen, die entlang der Randfläche quer zu den Kanalöffnungen und den sich anschließenden Kanälen verläuft, um vom Volumen der Bodenplatte umschrieben zu werden.

10. Strukturleiste gemäß einem der vorhergehenden Ansprüche, wobei das Abdeckelement eine zusätzliche Dichtlippe (44) hat, die ausgestaltet ist, um über Kantenbegrenzungen (46) der Bodenplatte hinauszuragen und mit diesen und einer angrenzenden Sitzschiene (48) einen Dichtungsbereich (50) zu bilden.

11. Strukturleiste gemäß einem der vorhergehenden Ansprüche, wobei der Formschlussbereich ferner eine flexible Beschichtung (52) hat, um Reibungshaftung mit einem Bodenplattenmaterial (54) zu erhöhen und das Verankern zu verstärken.

12. Eine Bodenplattenanordnung (100), aufweisend:
- eine Strukturleiste (110) gemäß einem der vorgehenden Ansprüche;
- mindestens ein Befestigungsmittel (112); und
- eine Bodenplatte (114), aufweisend:
- ein Oberflächenelement (114a);
- ein Unterflächenelement (114b); und
- eine Verstärkungsstruktur (114c);
wobei die Verstärkungsstruktur sandwichartig von dem Oberflächenelement und dem Unterflächenelement eingeschlossen ist und periodische Kanäle innerhalb der Bodenplatte ausformt, die in Kanalöffnungen an lateralen Randflächen der Bodenplatte münden;
wobei die Kanalöffnungen von Formschlusselementen einer Strukturleiste dichtend verstopft sind, um ein Eindringen von Fluiden in die periodischen Kanäle zu verhindern;
wobei das mindestens eine Befestigungsmittel die Strukturleiste mittels des Formschlussbereichs an der Bodenplatte sichert; und
wobei die Bodenplatte durch einen Eingriff des Formschlussbereichs in die Kanalöffnungen und einen Abdeckbereich eines Leistenkörpers gegen Verformungen zusätzlich versteift ist.

13. Ein Kabinenbodensystem (200), aufweisend:
- eine Sitzschiene (202) mit einem Auflagebereich (204);
- mindestens ein Bodenplattenbefestigungsmittel (206); und
- mindestens eine Bodenplattenanordnung (210) gemäß Anspruch 12;
wobei die mindestens eine Bodenplattenanordnung auf dem Auflagebereich aufliegt und der Auflagebereich in Kontakt mit einer Strukturleiste ist;
wobei das Bodenplattenbefestigungsmittel die Bodenplattenanordnung mit der Strukturleiste an der Sitzschiene befestigt; und
wobei die Strukturleiste mit der Sitzschiene ein Oberflächenelement vom Unterflächenelement der Bodenplattenanordnung abdichtet.

14. Ein Luftfahrzeug (300), aufweisend:
- eine Rumpfstruktur (302) mit einem Innenvolumen (304); und
ein Kabinenbodensystem (310) gemäß Anspruch 13;
wobei das Kabinenbodensystem im Innenvolumen der Rumpfstruktur befestigt ist und das Innenvolumen in einen oberen Kabinenbereich und einen unteren Kabinenbereich trennt.

15. Ein Verfahren (400) zum Bereitstellen einer Bodenplatte für einen Flugzeugkabinenboden, das die folgenden Schritte aufweist:
a) Bereitstellen (402) eines Leistenkörpers, umfassend einen Abdeckbereich und einen Formschlussbereich, wobei der Leistenkörper ausgeformt ist, um einer Randfläche der Bodenplatte zu folgen, wobei der Abdeckbereich am Formschlussbereich angebracht ist, wobei der Formschlussbereich ausgeformt ist, um von Kanalöffnungen in der Randfläche aufgenommen zu werden, wobei der Formschlussbereich ausgeformt ist, um den Leistenkörper an der Randfläche zu verankern und wobei der Abdeckbereich ausgeformt ist, um bündig an die Randfläche anzuschließen und diese zu überdecken.
